# EUROPÄISCHE PATENTSCHRIFT

(11) **EP 2 154 091 B1**
(45) Veröffentlichungstag und Bekanntmachung des Hinweises auf die Patenterteilung: **29.05.2013**
(21) Anmeldenummer: 09166675.0
(22) Anmeldetag: 29.07.2009
(51) Int. Cl.: B65G 47/52

(54) **System zur Stückgutsortierung**
System for sorting articles
Système de tri d'articles

(30) Priorität: 11.08.2008 DE 102008037261
(43) Veröffentlichungstag der Anmeldung: 17.02.2010
(73) Patentinhaber: Siemens Aktiengesellschaft, 80333 München (DE)
(72) Erfinder: Hirsch, Dieter, 91058, Erlangen (DE); Linke, Martin, 81371, München (DE); Lorenz, Alois, 94086, Griesbach (DE)

(56) Entgegenhaltungen:
- EP-A1- 0 481 341
- EP-A1- 1 627 831
- EP-A2- 0 343 612
- JP-A- 2 182 613

## Beschreibung

Die Erfindung betrifft ein System zur Stückgutsortierung bestehend aus einer horizontal oder vertikal umlaufenden Aneinanderreihung von Sorterelementen, die jeweils mit einem quer zur Transportrichtung endlos antreibbaren Quergurt versehen sind, auf dem jeweils ein Stückgut, das von einem Einschleusmodul übernommen wird, zu seinem Bestimmungsort getragen wird, wobei der Antrieb des jeweiligen Quergurtes von einer lokalen Steuereinheit auf dem Sorterelement angesteuert wird, von der am Einschleusort des Stückgutes und/oder dessen Bestimmungsort der Befehl zur elektrischen Aktivierung des Antriebes ausgegeben wird.

Hochleistungs-Sortiersysteme dieser Art bestehen im Allgemeinen aus einer großen Anzahl von Sorterelementen, die, miteinander verbunden, auf geschlossenen Bahnen umlaufen. Jedes Sorterelement trägt einen quer zu der Transportrichtung des Sorters um Umlenkrollen geführten antreibbaren Quergurt, auf dem das von einem Einschleusmodul übernommene Stückgut getragen und zu dessen Bestimmungsort (Sortierziel) transportiert wird. An dem Einschleusort und dem Sortierziel werden die Quergurte der Sorterelemente elektrisch aktiviert, um das Stückgut seitlich aufzunehmen oder auszutragen. Die vorliegende Erfindung betrifft den Kommunikationsweg und die Ansteuerungsart der vorstehend beschriebenen angetriebenen Quergurte der Sorterelemente.

Die Antriebe der Quergurte werden derzeit entweder durch eine lokale Steuereinheit (Control unit) auf dem Sorterelement oder von einer zentralen Steuereinheit (z.B. Sorter-SPS) angesteuert. Der eigentliche Start- und Stoppbefehl des Quergurtantriebes kommt immer von einer externen Steuerung (Sorter-SPS oder Einschleusungs-SPS), da hier die Informationen liegen, wann das Stückgut den Quergurt erreicht, bzw. wann und ob das Stückgut vom Quergurt abtransportiert werden kann. Die Übertragung der Start-Stoppbefehle erfolgt dabei über wireless Bussysteme oder Datenschleifleitungen.

Nachteilig bei dieser Lösung ist es, dass es bei der Befehlsübertragung zu unterschiedlichen Übertragungszeiten kommt. Dies ist begründet durch:
- Programmlaufzeiten
- Telegrammlaufzeiten je nach Busbelastung (nicht deterministisch)
- Güte der Funkverbindung (eventuell Telegrammwiederholungen)
- Abnutzung und Sauberkeit der Schleifleitung (eventuell Telegrammwiederholungen)
- Kurze Unterbrechungen des Datenverkehrs beim Roaming (fahren von einer Funkzelle in die andere, bzw. von einem Schleifleitungsabschnitt zur nächsten).

Die Ungenauigkeit der Befehlslaufzeit vom Befehlsauslöser (z.B. Motor-Stopp) bis zum Abschalten des Motors, ergibt eine Ungenauigkeit bei der Positionierung des Stückgutes auf dem Quergurt, d.h. die Positioniertoleranz ist direkt abhängig von der Güte, Schnelligkeit und gleichbleibender (deterministischer) Datenübertragung zum Sortierelement.

Bisher gibt es zwar hierzu verschiedene, aber kostenintensive Ansätze diese Datenübertragung zu verbessern, jedoch bleibt immer eine bestimmte Ungenauigkeit bzw. Unsicherheit im Datenverkehr bestehen.

Es ist daher ein Ziel der Erfindung, ein einfaches System zu schaffen, mit dem die Positionierung der Stückgüter auf dem Quergurt der Sorterelemente auch bei hohen Sortiergeschwindigkeiten zuverlässig und sehr genau realisiert werden kann.

Zur Lösung der Aufgabe wird vorgeschlagen, dass vor der Ausgabe eines Start -Stoppbefehls an den Antrieb des Quergurtes die lokale Steuereinheit auf dem Sorterelement via Datenübertragung eine Vorgabe der auszuführenden Aktion erhält, deren Aktivierung anschließend über ein von Außen auf das mobile Sorterelement übertragenes Signal erfolgt.

Die Befehlsvorgabe an den Antrieb des Quergurtes wird zwar weiterhin über die bekannten und oben beschriebenen Kommunikationswege realisiert, jedoch wird erfindungsgemäß auf aufwändige Maßnahmen zur sicheren und schnellen Datenübertragung verzichtet. Stattdessen werden einfache Kommunikationswege eingesetzt. Die Befehlsvorgabe ist jedoch nicht mehr nur der eigentliche Start-Stoppbefehl, sondern eine Vorgabe der aus den bekannten zuvor ermittelten geometrischen und physikalischen Daten bestimmten auszuführenden Aktionen, wie z.B. Einschleusung von links, eventuell die Paketlänge, Stopp- und Beschleunigenswerte etc.. Die Vorgabe für den später auszuführenden Befehl erfolgt zeitunkritisch vor der eigentlichen Aktionsausführung, d.h. es steht ggf. genug Zeit auch für Telegrammwiederholungen bei einem Übertragungsfehler zu Verfügung.

Nach einem Vorschlag der Erfindung erfolgt die Aktivierung der auszuführenden Aktion über ein Binärsignal, das von außen auf das mobile Sorterelement übertragen wird.

Erfindungsgemäß erfolgt die Aktivierung mittels einer Sender-Empfänger-Lichtschranke. Jedes Sorterelement trägt eine direkt auf die lokale Steuereinheit des Sorterelements verdrahtete Empfängerlichtschranke, die im Vorbeifahren des Sorterelementes mit einem stationären Sender kommuniziert. Damit können das Einschaltsignal an den Motion Controller gegeben werden und die zuvor vorgegebene und dort gespeicherte Aktion in Gang gesetzt werden.

Vorzugsweise ist der stationäre Sender als Lichtleiste ausgebildet, die sich über einen Bereich gegenüber dem Einschleusort längs des Transportweges des Sorterelements erstreckt. Die ist sinnvoll, weil die Position des mobilen Sorterelements am Einschleusort zum Übernahmepunkt des Stückgutes auf den Quergurt unterschiedlich sein kann.

In einer günstigen Ausgestaltung der Erfindung ist vorgesehen, dass die Lichtleiste mit einer Übergabe-Lichtschranke am Einschleusmodul des Stückgutes auf das Sorterelement verschaltet ist und mindestens so lange aktiviert bleibt, wie das Stückgut am Einschleusort von der Übergabe-Lichtschranke detektiert wird. Dazu ist die Übergabe-Lichtschranke vorzugsweise hardwaremäßig mit der Sendelichtleiste verbunden (direkte Signaldurchschaltung).

Da die lokale Steuereinheit auf dem Sorterelement sehr genau die Vorderkante und Hinterkante des Stückgutes(damit auch die Stückgutlänge) übertragen bekommt, kann nach der Erfindung in Kenntnis der geometrischen Daten des Stückgutes und mit Hilfe der Wegrückmeldung des Motors mittels integriertem Inkrementalgebers die lokale Steuereinheit den Quergurt stoppen und das Stückgut genau positionieren.

Bei langem Stückgut, wird erfindungsgemäß die erfasste oder bekannte Stückgutlänge mittels Datenübertragung vorab an die lokale Steuereinheit übermittelt, um den Stoppvorgang auch dann einzuleiten, wenn die Übergabe-Lichtschranke noch nicht freigeworden ist.

Die Erfindung schafft ein System für eine zuverlässige und sehr genaue Positionierung beim Einschleusen der Stückgüter auf einen Quergurt-Sorter, sowie auch einen sehr genauen Startpunkt der Ausschleusung eines Stückgutes vom Quergurt-Sorter. Mit einfachen Mitteln sind mit der Erfindung Zuverlässigkeitsvorteile und Positioniergenauigkeit des Stückgutes auf dem Quergurt des Sorters zu erwarten.

Die Breite eines Quergurtsorters kann zur Stückgutgröße optimal ausgenutzt werden, d.h. die Baugröße (Breite) eines Quergurtsorters kann gegenüber der herkömmlichen Lösung (Paketlänge + Positionierungenauigkeit / Bremsweg) verkleinert werde. Dies ergibt Kostenvorteile, Gewichts- und Energieeinsparung.

Da der Quergurt Sorter bedingt durch Kurven, physikalisch in der Baubreite begrenzt ist, kann hier auch ein Wettbewerbervorteil gesehen werden, denn größere Stückgutabmessungen werden ermöglicht. Durch die Genauigkeit der Stückgutpositionierung bei maximal großen Paketen ohne Überstand des Stückgutes nach der Einschleusung kann die Fehlerquote gesenkt und die Verfügbarkeit erhöht werden. Auch bei der Ausschleusung ergeben sich Vorteile in der Verfügbarkeit, durch sehr genaue Startpunkte der Ausschleusung und Mittelpositionierung des Stückgutes. Auch wird die Ausschleusparabel (Abwurfparabel) genauer, was eine engere Bauweise von Ausschleusungen oder Sorterendstellen zulässt.

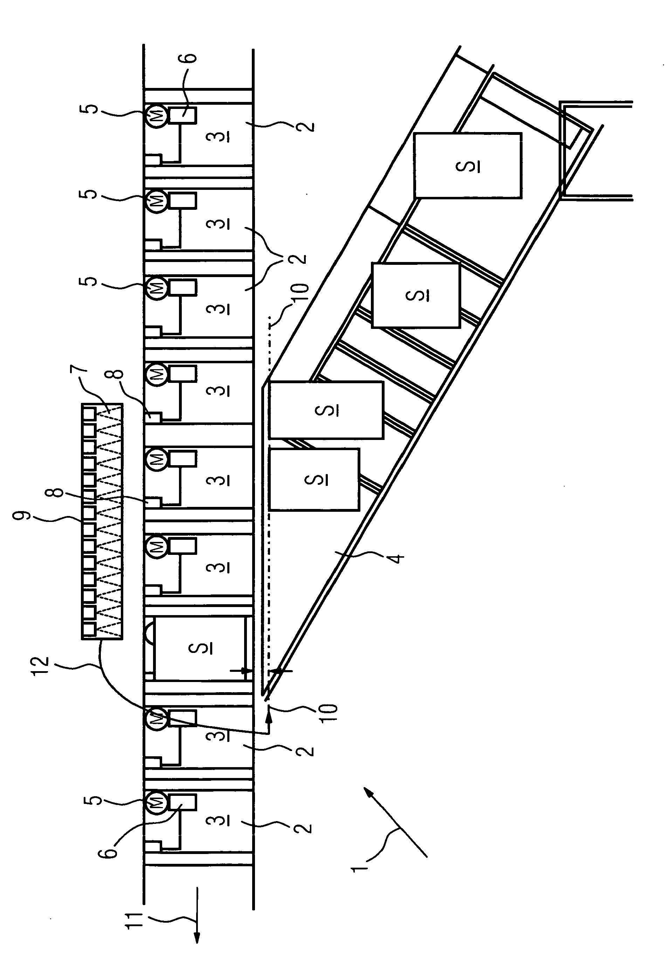

Anhand einer Zeichnung wird die Erfindung nachfolgend beschrieben. Mit 1 ist die Draufsicht auf einen Ausschnitt aus einem System zur Stückgutsortierung bezeichnet, das aus einem endlosen Loop aneinandergereihter Sorterelemente 2 besteht. In der Zeichnung sind nur neun von einer Vielzahl auf der geschlossenen Bahn geführten, miteinander gekoppelten Sorterelementen 2 dargestellt, deren Transportrichtung mit dem Pfeil 11 gekennzeichnet ist. Jedes Sorterelement 2 ist mit einem quer zur Transportrichtung 11 endlos antreibbaren Quergurt 3 versehen, auf dem jeweils ein Stückgut S auflegbar ist. Das Stückgut S, das von einem Einschleusmodul 4 auf das den Quergurt 3 des jeweiligen Sorterelements 2 übergeben wird, wird auf dem Quergurt 3 aufliegend zu seinem Bestimmungsort (Zielort) getragen, wo es durch Antreiben des Quergurtes 3 seitlich ausgeschleust wird.

Systeme dieser Art sind dem Fachmann an sich bekannt und brauchen hier nicht weiter beschrieben zu werden. Deshalb beschränkt sich die nachfolgende Beschreibung auf die Übergabe des Stückgutes S vom Einschleusmodul 4 auf das jeweilige Sorterelement 2.

Jedes Sorterelement 2 führt eine lokale Steuereinheit 6 mit sich, über die der auf jedem Sorterelement mitfahrende Antriebsmotor 5 für den Quergurt 3 aktivierbar ist. Der Steuereinheit 6 wird über eine Datenverbindung bereits zu einem frühen Zeitpunkt die Information über ein später von dem Quergurt 3 aufzunehmendes Stückgut S (Abmessungen, Gewicht, Einschleusseite...) mitgeteilt und gespeichert. Die entsprechenden Informationen werden bereits auf dem Einschleusmodul oder einem stromaufwärts angeordneten Zuförderer erfasst und an die lokale Steuereinheit 6 gegeben. Selbst bei langsamer Übertragung der Daten steht dadurch ausreichend Zeit zur Verfügung; selbst bei einem Übertragungsfehler kann die Übertragung wiederholt werden. Da der jeweilige von dem Sorteelement 2 auszuführende Stopp-Go-Befehl zur exakten Positionierung des Stückgutes S durch die Vorgabe der Informationen an die Steuereinheit 6 bereits vorab bekannt und somit vorprogrammierbar, braucht zur Ausführung der Aktion nur noch ein Aktivierungsbefehl gegeben zu werden.

Die Aktivierung des Befehls erfolgt durch ein Binäres Signal einer Sender-Empfänger-Lichtschranke, wobei im Beispielsfall die Sender-Lichtschranke durch eine Lichtleiste 9 gebildet ist. Diese gibt ihr Signal an Empfänger 8 ab, von denen jeweils einer auf jedem mobilen Sorterelement 2 angeordnet und der mit der lokalen Steuereinheit 6 dieses Sorterelementes 2 verdrahtet ist. Am Übergabeort zwischen Sorterelement 2 und Einschleusmodul 4 ist eine die Vorderkante des Stückgutes S erfassende Übergabelichtschranke 10 angeordnet, die hardwaremäßig bei 12 mit der Lichtleiste 9 verdrahtet ist. Sobald die Anwesenheit eines in vorberechneter Position zum Einschleusen bereit liegenden einzuschleusendes Stückgut S erfasst ist, empfängt der Empfänger 8 auf dem zugeordneten Sorterelement 2 vom Sender der Lichtleiste 9 den Start-Befehl zum Antreiben des Quergurtes 3, durch den der Motor 6 in Gang gesetzt wird. Da bereits alle zum genauen Einschleusen des Stückgutes 2 erforderlichen geometrischen Informationen über das Stückgut dem lokalen Steuerelement vorab vorgegeben wurden, kann daraus zum richtigen Zeitpunkt der Stoppbefehl an den Antrieb abgeleitet werden. Dadurch ist ein sehr genaues Positionieren des Stückgutes S auf dem Quergurt mit sehr einfachen steuerungstechnischen Mitteln (binäres Signal) möglich.

## Patentansprüche

1. System zur Stückgutsortierung bestehend aus einer horizontal oder vertikal umlaufenden Aneinanderreihung von Sorterelementen, die jeweils mit einem quer zur Transportrichtung endlos antreibbaren Quergurt versehen sind, auf dem jeweils ein Stückgut, das von einem Einschleusmodul übernommen wird, zu seinem Bestimmungsort getragen wird, wobei der Antrieb des jeweiligen Quergurtes von einer lokalen Steuereinheit auf dem Sorterelement angesteuert wird, von der am Einschleusort des Stückgutes und/oder dessen Bestimmungsort der Befehl zur elektrischen Aktivierung des Antriebes ausgegeben wird,
**dadurch gekennzeichnet, dass** vor der Ausgabe eines Start - Stoppbefehls an den Antrieb des Quergurtes (3) die lokale Steuereinheit (6) auf dem Sorterelement (2) via Datenübertragung eine Vorgabe der auszuführenden Aktion erhält, deren Aktivierung anschließend über ein von Außen auf das mobile Sorterelement (2) übertragenes Signal erfolgt.

2. System zur Stückgutsortierung nach Anspruch 1,
**dadurch gekennzeichnet, dass** die Aktivierung der auszuführenden Aktion über ein Binärsignal (7, 8)erfolgt.

3. System zur Stückgutsortierung nach Anspruch 1 und 2, **dadurch gekennzeichnet, dass** die Aktivierung mittels einer Sender-Empfänger Lichtschranke (7, 8) übertragen wird.

4. System zur Stückgutsortierung nach Anspruch 1 bis 3, **dadurch gekennzeichnet, dass** jedes Sorterelement (2) eine direkt auf die lokale Steuereinheit (6) des Sorterelements (2) verdrahtete Empfängerlichtschranke (8) besitzt, die im Vorbeifahren des Sorterelementes mit einem stationären Sender (7) kommuniziert.

5. System zur Stückgutsortierung nach Anspruch 4,
**dadurch gekennzeichnet, dass** der stationäre Sender als Lichtleiste (9) ausgebildet ist, die sich über einen Bereich gegenüber dem Einschleusort längs des Transportweges des Sorterelements (2) erstreckt.

6. System zur Stückgutsortierung nach Anspruch 5,
**dadurch gekennzeichnet, dass** die Lichtleiste (9) mit einer Übergabe-Lichtschranke (10) am Einschleusmodul des des Stückgutes (S) auf das Sorterelement (2) verschaltet ist und mindestens so lange aktiviert bleibt, wie das Stückgut (S) am Einschleusort von der Übergabe-Lichtschranke (10) detektiert wird.

7. System zur Stückgutsortierung nach Anspruch 6,
**dadurch gekennzeichnet, dass** die Übergabe-Lichtschranke (10) die Vorderkante und Hinterkante des Stückgutes (S) erfasst und die daraus ermittelbare Stückgutlänge an die lokale Steuereinheit (6) überträgt.

8. System zur Stückgutsortierung nach einem der Ansprüche 1 bis 7,
**dadurch gekennzeichnet, dass** in Kenntnis der geometrischen Daten des Stückgutes (S) und mit Hilfe der Wegrückmeldung des Motors (5) mittels integriertem Inkrementalgebers die lokale Steuereinheit (6) den Quergurt (3) stoppt und das Stückgut (S) positioniert.

9. System zur Stückgutsortierung nach einem der Ansprüche 1 bis 8,
**dadurch gekennzeichnet, dass** bei langem Stückgut (S) dessen erfasste oder bekannte Stückgutlänge mittels Datenübertragung vorab an die lokale Steuereinheit übermittelt wird, um den Stoppvorgang einzuleiten, wenn die Übergabe-Lichtschranke (10) noch nicht freigeworden ist.

## Claims

1. System for sorting piece goods, comprising a horizontally or vertically circulating sequence of sorter elements which are each provided with a crossbelt which can be continuously driven transversely with respect to the direction of transport and on which a respective piece goods item which is accepted from an introduction module is carried to its intended location, the drive of the respective crossbelt being controlled by a local control unit on the sorter element, which control unit outputs the command to electrically activate the drive at the location at which the piece goods item is introduced and/or at the intended location of the latter,
**characterized in that**, before a start/stop command is output to the drive of the crossbelt (3), the local control unit (6) on the sorter element (2) receives, via data transmission, a specification of the action to be carried out, which action is then activated by means of a signal transmitted to the mobile sorter element (2) from the outside.

2. System for sorting piece goods according to Claim 1, **characterized in that** the action to be carried out is activated by means of a binary signal (7, 8).

3. System for sorting piece goods according to Claims 1 and 2,
**characterized in that** the activation is transmitted by means of a transceiver light barrier (7, 8).

4. System for sorting piece goods according to Claims 1 to 3,
**characterized in that** each sorter element (2) has a receiver light barrier (8) which is directly wired to the local control unit (6) of the sorter element (2) and communicates with a stationary transmitter (7) as the sorter element moves past.

5. System for sorting piece goods according to Claim 4,
**characterized in that** the stationary transmitter is in the form of a light strip (9) which extends along the transporting path of the sorter element (2) over a region opposite the introduction location.

6. System for sorting piece goods according to Claim 5,
**characterized in that** the light strip (9) is connected to a transfer light barrier (10) at the module for introducing the piece goods item (S) onto the sorter element (2) and remains activated at least as long as the piece goods item (S) is detected by the transfer light barrier (10) at the introduction location.

7. System for sorting piece goods according to Claim 6,
**characterized in that** the transfer light barrier (10) detects the front edge and rear edge of the piece goods item (S) and transmits the length of the piece goods item, which can be determined therefrom, to the local control unit (6).

8. System for sorting piece goods according to one of Claims 1 to 7,
**characterized in that**, with knowledge of the geometrical data of the piece goods item (S) and with the aid of the path feedback from the motor (5) by means of an integrated incremental encoder, the local control unit (6) stops the crossbelt (3) and positions the piece goods (S).

9. System for sorting piece goods according to one of Claims 1 to 8,
**characterized in that**, in the case of a long piece goods item (S), the detected or known length of said piece goods item is transmitted in advance to the local control unit by means of data transmission in order to initiate the stopping operation if the transfer light barrier (10) has not yet become available.

## Revendications

1. Système de tri de colis constitué d'une mise en file tournant horizontalement ou verticalement d'éléments formant trieur, qui sont pourvus respectivement d'une courroie transversale qui peut être entraînée sans fin transversalement à la direction de transport et sur laquelle est portée vers son emplacement de destination un colis qui est pris en charge par un module d'entrée, dans lequel l'entraînement de la courroie transversale est commandé par une unité de commande locale sur l'élément formant trieur, unité de laquelle est émis à l'emplacement d'entrée du colis et/ou à son emplacement de destination, l'instruction d'activation électrique de l'entraînement,
**caractérisé en ce qu'**avant l'émission d'une instruction de démarrage/arrêt à l'entraînement de la courroie ( 3 ) transversale, l'unité ( 6 ) de commande locale reçoit sur l'élément ( 2 ) formant trieur, par l'intermédiaire d'une transmission de données, une prescription de l'action à exécuter, dont l'activation s'effectue ensuite par un signal transmis de l'extérieur à l'élément ( 2 ) mobile formant trieur.

2. Système de tri de colis suivant la revendication 1,
**caractérisé en ce que** l'activation de l'action à exécuter s'effectue par un signal ( 7, 8 ) binaire.

3. Système de tri de colis suivant la revendication 1 et 2, **caractérisé en ce que** l'activation est transmise au moyen d'une cellule ( 7, 8 ) photo-électrique émetteur-récepteur.

4. Système de tri de colis suivant la revendication 1 à 3,
**caractérisé en ce que** chaque élément ( 2 ) formant trieur a une cellule photo-électrique ( 8 ) de récepteur branchée directement sur l'unité ( 6 ) locale de commande de l'élément ( 2 ) formant trieur et communiquant avec un émetteur fixe lors du défilement de l'élément formant trieur.

5. Système de tri de colis suivant la revendication 4,
**caractérisé en ce que** l'émetteur fixe est constitué sous la forme d'une réglette ( 9 ) d'éclairage, qui s'étend le long de la voie de transport de l'élément ( 2 ) formant trieur sur une région en face de l'emplacement d'entrée.

6. Système de tri de colis suivant la revendication 5,
**caractérisé en ce que** la réglette ( 9 ) d'éclairage est branchée avec une cellule photo-électrique ( 10 ) de transfert au module d'entrée du colis sur l'élément ( 2 ) formant trieur et reste activée au moins aussi longtemps que le colis ( S ) est détecté à l'emplacement d'entrée par la cellule photo-électrique ( 10 ) de transfert.

7. Système de tri de colis suivant la revendication 6,
**caractérisé en ce que** la cellule photo-électrique ( 10 ) de transfert détecte le bord avant et le bord arrière du colis ( S ) et transmet la longueur du colis, qui peut être ainsi déterminée, à l'unité ( 6 ) local de commande.

8. Système de tri de colis suivant l'une des revendications 1 à 7,
**caractérisé en ce qu'**en connaissance des données géométriques du colis ( S ) et à l'aide du message de déplacement du moteur ( 5 ) au moyen d'indicateur incrémentaux intégrés, l'unité ( 6 ) de commande locale arrête la courroie ( 3 ) transversale et met le colis ( S ) en position.

9. Système de tri de colis suivant l'une des revendications 1 à 8,
**caractérisé en ce que**, si le colis ( S ) est long, sa longueur détectée ou connue est transmise au préalable au moyen d'une transmission de données à l'unité de commande locale pour lancer l'opération d'arrêt si la cellule photo-électrique ( 10 ) de transfert n'est pas encore libérée.
